# EUROPÄISCHE PATENTSCHRIFT

(11) **EP 3 891 051 B1**
(45) Veröffentlichungstag und Bekanntmachung des Hinweises auf die Patenterteilung: **23.02.2022**
(21) Anmeldenummer: 20731822.1
(22) Anmeldetag: 04.06.2020
(51) Int. Cl.: B62D 53/08, B62D 53/12

(54) **KÖNIGSZAPFENANORDNUNG**
KINGPIN ARRANGEMENT
ENSEMBLE DE PIVOT D'ATTELAGE

(30) Priorität: 13.06.2019 DE 102019116064
(43) Veröffentlichungstag der Anmeldung: 13.10.2021
(73) Patentinhaber: SAF-HOLLAND GmbH, 63856 Bessenbach (DE)
(72) Erfinder: KÖSTER, Mario Sebastian, 78351 Bodman-Ludwigshafen (DE)
(74) Vertreter: Müller Schupfner & Partner Patent- und Rechtsanwaltspartnerschaft mbB
(86) Internationale Anmeldenummer: PCT/EP2020/065473
(87) Internationale Veröffentlichungsnummer: WO 2020/249458

(56) Entgegenhaltungen:
- EP-A1- 2 112 008
- WO-A1-2008/009660
- DE-B3-102018 101 169

## Beschreibung

Die Erfindung betrifft eine Königszapfenanordnung, insbesondere für ein automatisches Kupplungssystem.

Königszapfenanordnungen sind aus dem Stand der Technik bekannt, diese dienen dazu, an einem Anhänger angeordnet zu werden. Die Königszapfenanordnungen umfassen dabei meist ein Königszapfen, welcher dazu dient, in eine Sattelkupplungsanordnung eingeführt zu werden und dort meist formschlüssig verkuppelt zu werden. Durch diese Verkupplung kann eine Zugkraft von der Sattelkupplungsanordnung auf die Königszapfenanordnung übertragen werden. Die aus dem Stand der Technik bekannten Königszapfenanordnungen sind zunehmend derart ausgebildet, dass diese Einsatz in einem automatischen Kupplungssystem finden. In einem solchen automatischen Kupplungssystem wird meist ein Stecker rotatorisch um den Königszapfen herum gelagert, wobei dieser Stecker automatisch mit einem komplementär ausgebildeten Stecker auf dem Zugfahrzeug - beim Verkuppeln - verbunden wird. Problematisch bei diesen aus dem Stand der Technik bekannten Anordnungen ist jedoch, dass diese Systeme einen besonders hohen Bauraumbedarf aufweisen.

Die WO 2008/009660 A1 zeigt den Oberbegriff des unabhängigen Anspruchs und betrifft eine Steckerkonsole für einen Auflieger eines

Sattelzugs, umfassend ein um ein Lager schwenkbares Tragelement und ein in dem Tragelement angeordneten Stecker, wobei das Tragelement einen Gehäuserahmen mit einem komplementär zu einer Einfahröffnung einer Sattelkupplung ausgeformten Abschnitt aufweist.

Die EP 2 112 008 A1 betrifft ebenfalls eine Steckerkonsole für ein Anhängerfahrzeug eines Lastzugs, umfassend ein an einem Lager um ein Kupplungsmittel des Anhängers schwenkbaren Tragrahmen und ein an dem Tragrahmen ortsfest angeordneten Stecker.

Die DE 10 2018 101 169 B3 betrifft eine Kopplungskomponente, insbesondere einen Ausleger, für einen Schnittstellenbereich zwischen einem Sattelauflieger und einer Sattelzugmaschine.

Es ist daher Aufgabe der vorliegenden Erfindung eine Königszapfenanordnung bereit zu stellen, welche kompakt ist und nur einen geringen Bauraumbedarf benötigt.

Diese Aufgabe wird mit einer Königszapfenanordnung gemäß dem Anspruch 1 gelöst, weitere vorteilhafte Ausführungsformen und Merkmale ergeben sich aus den Unteransprüchen, der Beschreibung und den beigefügten Figuren.

Erfindungsgemäß umfasst eine Königszapfenanordnung, insbesondere für ein automatisches Kupplungssystem, einen Königszapfen, einen Drehteller und eine Tragstruktur, wobei der Königszapfen sich in eine Königszapfenrichtung erstreckt, wobei der Drehteller drehbar um die Königszapfenrichtung relativ zum Königszapfen gelagert, insbesondere gleitgelagert, ist, wobei der Drehteller eine Öffnung aufweist, durch welche sich der Königszapfen erstreckt, wobei die Tragstruktur sich in eine radiale Richtung erstreckt, wobei die Tragstruktur Befestigungsmittel zum mittelbaren und/oder unmittelbaren Befestigen und/oder zum Lagern eines Steckverbinders aufweist, wobei die Tragstruktur mittel- und/oder unmittelbar am Drehteller festgelegt ist, insbesondere mit einem ersten Ende der Tragstruktur. Die erfindungsgemäße Königszapfenanordnung dient dazu, an einem Anhänger, insbesondere an einem Sattelauflieger, montiert zu sein. Ein derartiger Anhänger dient grundlegend dazu, mittels eines Zugfahrzeugs gezogen zu werden. Dieses Ziehen erfolgt insbesondere dadurch, dass der Königszapfen der Königszapfenanordnung in einer Sattelkupplungsanordnung eines Zugfahrzeugs einfahrbar und dort einkuppelbar ist, sodass Kräfte von dem Zugfahrzeug auf den Anhänger über den Königszapfen übertragen werden können. In anderen Worten kann dies bedeuten, dass der Königszapfen der Königszapfenanordnung dazu dient, Zug- und/oder Schubkräfte zwischen einem Anhänger und einem Zugfahrzeug zu übertragen. Die Königszapfenanordnung dient insbesondere dazu, in einem automatischen Kupplungssystem eingesetzt zu sein. Ein automatisches Kupplungssystem im Sinne der Erfindung ist insbesondere ein Kupplungssystem, welches dazu dient und/oder dazu ausgelegt ist, Strom, pneumatische und/oder elektrische Energie oder andere Energien oder Informationssignale zwischen einem Zugfahrzeug und einem Anhänger durch ein automatisches Verbinden von Energie- oder Informationsleitungen zu übertragen. Der Königszapfen der erfindungsgemäßen Königszapfenanordnung erstreckt sich entlang einer Königszapfenrichtung. In anderen Worten kann dies bedeuten, dass die Königszapfenrichtung diejenige Richtung ist, in welche sich die Länge des Königszapfens bestimmt. Insbesondere ist der Königszapfen zumindest bereichsweise rotationssymmetrisch um die Königszapfenrichtung ausgebildet. Der Drehteller der Königszapfenanordnung ist drehbar um die Königszapfenrichtung gelagert, insbesondere durch den Einsatz von Gleitlagern. Die Verwendung von Gleitlagern für die Lagerung des Drehtellers hat dabei den Vorteil, dass hierdurch eine besonders bauraumsparende Lagerung erreicht wird. Durch die rotierbare Lagerung des Drehtellers relativ zum Königszapfen kann die Tragstruktur um die Königszapfenrichtung geschwenkt werden, sodass dieser insbesondere in der Lage ist, beispielsweise bei Kurvenfahrten verschwenkt werden zu können. Der Drehteller weist eine Öffnung auf, durch die sich der Königszapfen erstreckt und/oder erstrecken kann. In anderen Worten kann dies bedeuten, dass der Königszapfen zumindest teilweise durch den Drehteller geführt ist. Neben dem Königszapfen und dem Drehteller umfasst die Königszapfenanordnung eine Tragstruktur. Diese Tragstruktur erstreckt sich in eine radiale Richtung. Die radiale Richtung ist insbesondere derart beschaffen, dass diese senkrecht zur Königszapfenrichtung steht. Die Erstreckungsrichtung der Tragstruktur ist dabei insbesondere diejenige Richtung, in welche sich die Tragstruktur erstreckt. Alternativ oder zusätzlich bevorzugt kann die Erstreckungsrichtung der Tragstruktur auch diejenige Richtung sein, in welche sich die Länge der Tragstruktur bestimmt. Die Tragstruktur weist vorteilhafterweise Befestigungsmittel zum mittel- und/oder unmittelbaren Befestigen und/oder Lagern eines Steckverbinders auf. Der Steckverbinder dient insbesondere dazu, mit einem komplementär ausgebildeten Stecker auf einem Zugfahrzeug verbunden und/oder verbindbar zu sein. In anderen Worten kann dies bedeuten, dass durch den Steckverbinder in Verbindung mit dem komplementär ausgebildeten Stecker auf dem Zugfahrzeug ein automatisches Kupplungssystem ausgebildet bzw. realisiert wird. Beispielsweise kann der Steckverbinder über pneumatische, hydraulische und/oder elektrische Steckkontakte verfügen, um eine energieleitende Verbindung mit einem Zugfahrzeug zu etablieren. Die Befestigung und/oder das Lagern des Steckverbinders an der Tragstruktur erfolgt über die Befestigungsmittel der Tragstruktur, wobei diese beispielsweise als Bohrungen und/oder Vorsprünge und/oder als Festlegungsflächen ausgebildet sein können. Unter Befestigen und/oder Lagern kann in diesem Zusammenhang verstanden werden, dass die Tragstruktur dazu dient, den Steckverbinder abzustützen bzw. zu tragen. Die Tragstruktur selbst ist dabei mittel- und/oder unmittelbar am Drehteller festgelegt, insbesondere mit einem ersten Ende der Tragstruktur. Das erste Ende der Tragstruktur bildet insbesondere einen distalen Endbereich der Tragstruktur aus, wobei das erste Ende insbesondere der distale Endbereich der Tragstruktur ist, welcher dem Königszapfen zugewandt ist. Vorteilhafterweise weist das erste Ende Montageöffnungen für eine Festlegung auf. Diese Festlegung am Drehteller kann dabei insbesondere durch eine reversible Festlegung mittels Schrauben erfolgen. Alternativ oder zusätzlich bevorzugt kann die Festlegung der Tragstruktur am Drehteller auch durch stoffschlüssiges, formschlüssiges und/oder kraftschlüssiges Fügen erfolgen. Unter festgelegt kann in diesem Zusammenhang verstanden werden, dass das eine Ende der Tragstruktur ortsfest in Relation zum Drehteller angeordnet sein kann. In anderen Worten kann dies bedeuten, dass der Drehteller und die Tragstruktur relativ zu einander fest verbunden sein können. Durch das Anordnen der Tragstruktur mittel- und/oder unmittelbar am Drehteller resultiert - trotz der Tragstruktur - eine besonders kompakte Königszapfenanordnung, die nur einen geringen Bauraumbedarf aufweist. Vorteilhafterweise ragt die Tragstruktur in die radiale Richtung über den Drehteller hinaus. Über den Drehteller hinausragen ist dabei derart zu verstehen, dass die Tragstruktur in Richtung der radialen Richtung weiter vom Königszapfen beabstandet ist als jeglicher Teil des Drehtellers. Insbesondere ist die Tragstruktur dabei derart radial weiter hinausragend ausgebildet - im Vergleich zum Drehteller, dass der maximale Abstand der Tragstruktur zum Königszapfen bzw. zu der Königszapfenrichtung des Königszapfens doppelt so weit beabstandet ist wie der maximale Abstand des Drehtellers von der Königszapfenrichtung. Durch das Hinausragen der Tragstruktur in die radiale Richtung über den Drehteller kann eine bessere Zugänglichkeit der Befestigungsmittel der Tragstruktur erreicht werden. Hierdurch kann daher insbesondere die Festlegung und die Zugänglichkeit des Steckverbinders verbessert bzw. vereinfacht werden.

Vorteilhafterweise beträgt der minimalste Abstand zwischen dem Königszapfen und der Tragstruktur, insbesondere zwischen dem Königszapfen und dem ersten Ende der Tragstruktur, maximal 35 mm, bevorzugt maximal 10 mm und besonders bevorzugt maximal 5 mm. Der minimalste Abstand ist dabei der theoretisch kleinste Abstand zwischen dem Königszapfen und der Tragstruktur. Bei einem minimalsten Abstand zwischen dem Königszapfen und der Tragstruktur von maximal 35 mm kann eine besonders kompakte Königszapfenanordnung erreicht werden, die leicht montiert werden kann. Bei einem minimalsten Abstand von maximal 10 mm hat die Anmelderin überraschend herausgefunden, dass bei einer derartigen Anordnung besonders vorteilhafte Schwingungsdämpfungseigenschaften resultieren. Durch einen minimalsten Abstand zwischen dem Königszapfen und der Tragstruktur von maximal 5 mm kann eine besonders sichere Königszapfenanordnung erreicht werden, da ein Eingreifen bzw. ein Einquetschen in den Spalt zwischen dem Königszapfen und der Tragstruktur - bei einem derartig geringen Abstand - besonders schwierig ist. Daher erhöht ein solcher minimalster Abstand von maximal 5 mm die Betriebssicherheit der Königszapfenanordnung.

Zweckmäßigerweise liegt das Verhältnis des minimalsten Abstands zwischen dem Königszapfen und der Tragstruktur, insbesondere dem Anbindungspunkt der Tragstruktur, zu dem maximalen Durchmesser des Drehtellers in einem Bereich von 0,002 bis 0,3, bevorzugt in einem Bereich von 0,005 bis 0,2 und besonders bevorzugt in einem Bereich von 0,01 bis 0,13. Der maximale Durchmesser des Drehtellers ist dabei insbesondere der Durchmesser der maximalen äußeren Abmessung des Drehtellers. Bei einem Verhältnis des minimalsten Abstands zwischen dem Königszapfen und der Tragstruktur zu dem maximalen Durchmesser des Drehtellers im Bereich von 0,002 bis 0,3 kann eine besonders sichere Festlegung erreicht werden, denn bei dieser Ausgestaltung steht für die Tragstruktur eine ausreichend große Abstützfläche zur Verfügung, sodass eine besonders kipparme Abstützung gewährleistet werden kann. Bei einem Verhältnis im Bereich von 0,005 bis 0,2 hat die Anmelderin überraschend herausgefunden, dass die Tragstruktur im Betrieb ein besonders geringes Schwingungsverhalten aufweist. Bei einem Verhältnis im Bereich von 0,01 bis 0,13 resultiert eine besonders bauraumsparende Königszapfenanordnung. Der Anbindungspunkt der Tragstruktur ist dabei insbesondere der Punkt, mit welchem sich die Tragstruktur abstützt, beispielsweise gegenüber dem Drehteller.

Vorteilhafterweise ist die Tragstruktur, insbesondere der Anbindungspunkt der Tragstruktur, derart angeordnet und oder festgelegt, dass diese(r) unverschieblich und/oder ortsfest relativ zum bzw. gegenüber dem Drehteller gelagert bzw. befindlich ist. Hierdurch kann eine besonders mechanisch belastbare Königszapfenanordnung erreicht werden.

Bevorzugt ist der Königszapfen zumindest teilweise zwischen Bestandteilen der Tragstruktur angeordnet. Hierdurch kann eine besonders kompakte Bauweise der Königszapfenanordnung erreicht werden. Unter einem "zwischen" kann dabei verstanden werden, dass sich zumindest Teile der Tragstruktur beidseitig von dem Königszapfen erstrecken. In anderen Worten kann daher der Königszapfen zumindest teilweise bzw. zumindest abschnittsweise von der Tragstruktur umgeben sein bzw. sich zwischen Bestandteilen der Tragstruktur erstrecken.

Erfindungsgemäß weist die Tragstruktur zwei Schenkel auf, wobei jeder der Schenkel mittel- und/oder unmittelbar am Drehteller festgelegt ist, wobei vorteilhafterweise der Königszapfen zumindest teilweise zwischen den Schenkeln angeordnet ist. Durch das Vorsehen von zwei Schenkeln bzw. durch das zumindest teilweise Ausbilden der Tragstruktur über zwei verschiedene Schenkel, resultiert eine besonders leichte Tragstruktur, welche jedoch weiterhin ein besonders hohes Maß an Biegefestigkeit aufweist. Hierdurch kann sowohl Material als auch Gewicht gespart werden, sodass eine besonders leichte und dennoch belastbare Tragstruktur resultiert. Insbesondere sind die beiden Schenkel der Tragstruktur dabei derart ausgebildet, dass diese die Tragstruktur senkrecht zur Erstreckungsrichtung der Tragstruktur begrenzen. In anderen Worten kann dies bedeuten, dass die seitlichen Begrenzungen der Tragstruktur durch die Schenkel ausgebildet sind. Hierdurch resultiert eine besonders biegesteife Tragstruktur. Durch das Ausbilden der Königszapfenanordnung derart, dass der Königszapfen zumindest teilweise zwischen den Schenkeln angeordnet ist, resultiert eine besonders kompakte und bauraumsparende Königszapfenanordnung, denn hierdurch wird der vorhandene Bauraum optimal ausgenutzt. Um diese Bauraumausnutzung noch weiter zu verbessern, sind insbesondere diejenigen Flächen der Tragstruktur, welche nächstliegend zum Königszapfen ausgebildet sind, komplementär zum Königszapfen ausgebildet. Unter komplementär kann dabei beispielsweise bei einem rotationssymmetrischen Königszapfen um die Königszapfenrichtung verstanden werden, dass diese Flächen der Tragstruktur insbesondere rund ausgestaltet sind und wobei der Mittelpunkt dieser Rundung insbesondere auf der Königszapfenrichtung liegt. In anderen Worten kann dies bedeuten, dass die nächstliegend zu dem Königszapfen angeordneten Flächen denselben Rundungsmittelpunkt aufweisen wie die nächstliegenden und nach außen begrenzenden Flächen des Königszapfens. Hierdurch kann die Tragstruktur besonders nah am Königszapfen angeordnet werden, sodass eine besonders kompakte Königszapfenanordnung resultiert.

Vorteilhafterweise bilden bei einer Tragstruktur mit zwei Schenkeln jeder der beiden Schenkel einen Teil des ersten Endes der Tragstruktur aus und ist an diesem jeweiligen ersten Ende mit dem Drehteller festlegend verbunden. In anderen Worten kann dies bedeuten, dass jeder Schenkel einen eigenen Teil des ersten Endes der Tragstruktur ausbilden kann, wobei jeder dieser Teile wiederum am Drehteller festgelegt ist. Hierdurch resultiert eine besonders mechanisch sichere Abstützung der Tragstruktur.

Vorteilhafterweise ist die Tragstruktur spiegelsymmetrisch, insbesondere bezüglich einer Symmetrieebene, welche durch die Königszapfenrichtung und durch die radiale Richtung aufgespannt ist. Durch das Ausbilden der Tragstruktur als eine spiegelsymmetrische Struktur kann diese besonders einfach hergestellt werden. Darüber hinaus weist diese derartige Ausbildung auch noch Vorteile im Hinblick auf die Gewichtsverteilung auf.

Bevorzugt ist die Tragstruktur zumindest abschnittsweise v-förmig, insbesondere auf den Königszapfen zuweisend, ausgebildet. Unter einem abschnittsweise v-förmigen Ausbilden ist dabei zu verstehen, dass die äußere Kontur der Tragstruktur zumindest teilweise schräg zur Radialrichtung und/oder zur Erstreckungsrichtung der Tragstruktur ausgebildet ist. Hierdurch ist es insbesondere möglich, das Ausrichten der Tragstruktur beim Einfahren in eine Sattelkupplungsanordnung auf einem Zugfahrzeug zu erleichtern. Besonders bevorzugt ist es, wenn dieser zumindest teilweise V-förmig ausgebildete Abschnitt der Tragstruktur derart ausgebildet ist, dass die V-Form pfeilartig auf die Königszapfenrichtung bzw. auf den Königszapfen zuweist.

Zweckmäßigerweise weist der Drehteller einen Außendurchmesser von maximal 400 mm, bevorzugt von maximal 300 mm und besonders bevorzugt von maximal 250 mm auf. Der Außendurchmesser des Drehtellers ist dabei insbesondere der maximal mögliche Außendurchmesser des Drehtellers. Vorteilhafterweise liegt dabei der Mittelpunkt des Drehtellers auf der Königszapfenrichtung. Bei einem Außendurchmesser des Drehtellers von maximal 400 mm wird ein besonders guter Kompromiss zwischen mechanischer Belastbarkeit und Bauraumbedarf des Drehtellers und/oder der gesamten Königszapfenanordnung erreicht. Um ein besonders einfaches und kostengünstiges Herstellen des Drehtellers zu ermöglichen, sollte der maximale Außendurchmesser des Drehtellers maximal 300 mm betragen. Um eine besonders kompakte Königszapfenanordnung zu erreichen, sollte der Drehteller maximal 250 mm Außendurchmesser aufweisen. Beispielsweise kann ein derart kleiner Außendurchmesser des Drehtellers dadurch erreicht werden, dass der Drehteller gleitgelagert ist. Alternativ oder zusätzlich bevorzugt kann eine derartige kompakte Anordnung auch dadurch erreicht werden, dass der Drehteller beispielsweise aus Messing und/oder Bronze und/oder aus einem anderen gleitlagerfähigen Material ausgebildet ist. Denn durch diese Art der Ausbildung kann die Königszapfenanordnung auf bauraumintensive Wälzlageranordnungen verzichten. In diesem Zusammenhang sei jedoch darauf hingewiesen, dass ein gleitgelagerter Drehteller zwar klein ausgestaltet werden kann, jedoch nicht zwangsweise auch klein ausgestaltet sein muss. In anderen Worten bedeutet dies, dass gleitgelagerte Drehteller auch maximale Außendurchmesser von mehr als 300 mm aufweisen können.

Vorteilhafterweise ist der Drehteller zumindest teilweise aus Messing und/oder Bronze ausgebildet. Hierdurch kann eine besonders einfache Drehbarkeit des Drehtellers erreicht werden, denn Messing und/oder Bronze weisen besonders gute tribologische Eigenschaften, insbesondere im Hinblick auf den auftretenden Reibungsbeiwert und/oder in Hinblick auf die Verschleißfestigkeit auf. Durch den Einsatz von Messing und/oder Bronze als Drehtellermaterial kann insbesondere auf den Einsatz von Wälzlagern verzichtet werden. Vorteilhafterweise ist dabei zumindest der Teil des Drehtellers aus Messing und/oder Bronze ausgebildet, welcher mit weiteren Bauteilen zur Lagerung in Kontakt tritt. Hierdurch können die guten tribologischen Eigenschaften von Messing und/oder Bronze ideal ausgenutzt werden. Alternativ bevorzugt kann auch der gesamte Drehteller aus Messing und/oder Bronze ausgebildet sein. Hierdurch resultiert ein besonders einfach herzustellender Drehteller.

Zweckmäßigerweise weist der Drehteller zumindest einen Durchbruch auf, wobei der Durchbruch dazu ausgelegt ist, dass durch diesen Kabel und/oder Leitungen geführt sind. Der Durchbruch ist dabei insbesondere derart gestaltet, dass dieser ein Durchtreten eines Kabels und/oder einer Leitung von einer Oberseite zu einer Unterseite des Drehtellers ermöglicht. In anderen Worten kann dies bedeuten, dass der Durchbruch, insbesondere in Richtung der Königszapfenrichtung, den Teller vollständig durchdringt. Durch die Möglichkeit Kabel direkt durch den Drehteller zu führen, können besonders kurze Kabel und/oder Leitungslängen erreicht werden, sodass Kosten gespart werden können.

In einer vorteilhaften Ausführungsform mündet der Durchbruch zwischen Teilen der Tragstruktur, insbesondere zwischen den zwei Schenkeln der Tragstruktur. Durch das Vorsehen der Mündung des Durchbruchs zwischen Teilen der Tragstruktur, insbesondere zwischen den Schenkeln, werden die durch den Durchbruch geführten Kabel mechanisch gegen äußere Belastungen geschützt. In anderen Worten kann dies bedeuten, dass bei dem Vorsehen des Durchbruchs zwischen Teilen der Tragstruktur, insbesondere zwischen den zwei Schenkeln, die Schenkel bzw. die Tragstruktur bei einem Verdrehen der Tragstruktur zuerst mit einem "im Weg befindlichen" Teil kontaktiert(en), bevor die Kabel und/oder die Leitungen durch dieses "im Weg befindliche Teil" beschädigt werden können. Daher wird durch das Münden des Durchbruchs zwischen Teilen der Tragstruktur, insbesondere zwischen den zwei Schenkeln, eine besonders betriebssichere Königszapfenanordnung erreicht.

Zweckmäßigerweise weist die Königszapfenanordnung eine Kuppel auf, wobei der Königszapfen mittel- und/oder unmittelbar an der Kuppel befestigt ist, und wobei vorteilhafterweise die Kuppel eine Montagefläche aufweist, welche dazu ausgelegt ist, die Kuppel an einem Anhänger festzulegen. Die Kuppel dient insbesondere dazu, dass an dieser der Königszapfen mittel- und/oder unmittelbar insbesondere stoff- und/oder kraft- und/oder formschlüssig festgelegt ist. Zusätzlich ist die Kuppel dabei in der Lage, über die Montagefläche der Kuppel eine Last vom Königszapfen in einen Anhänger zu übertragen. Vorteilhafterweise weist die Montagefläche der Kuppel dabei eine Normale auf, welche parallel zur Königszapfenrichtung weist. Hierdurch kann eine besonders einfache und sichere sowie kompakte Königszapfenanordnung erreicht werden, welche eine besonders sichere Abstützung des Königszapfens erreicht. Vorteilhafterweise ist die Kuppel einstückig ausgebildet. Hierdurch kann die mechanische Belastbarkeit der Kuppel gesteigert werden.

Vorteilhafterweise ist die Kuppel derart ausgebildet, dass diese mittel- und/oder unmittelbar den Drehteller gegenüber dem Anhänger abstützt. Hierzu weist die Kuppel insbesondere eine Abstützfläche auf, die mittel- und/oder unmittelbar mit dem Drehteller kontaktiert und/oder dazu dient den Drehteller zu lagern bzw. abzustützen.

Vorteilhafterweise weist die Königszapfenanordnung eine Abschlussplatte auf, wobei die Abschlussplatte mittel- und/oder unmittelbar an der Kuppel angeordnet ist, wobei der Drehteller zumindest abschnittsweise zwischen der Abschlussplatte und der Kuppel angeordnet ist, insbesondere ist zumindest ein in die radiale Richtung außen liegender Lagerabschnitt des Drehtellers zwischen der Kuppel und der Abschlussplatte angeordnet, sodass eine Verlagerbarkeit des Drehtellers in die Königszapfenrichtung und in die radiale Richtung formschlüssig durch die Kuppel und/oder durch die Abschlussplatte verhindert ist. Durch diese unmittelbare formschlüssige Begrenzung der Verlagerbarkeit des Drehtellers wird eine besonders kompakte Anordnung erreicht. Vorteilhafterweise ist der Drehteller dabei derart angeordnet, dass in einer Richtung parallel zur Königszapfenrichtung der Lagerabschnitt zwischen der Kuppel und der Abschlussplatte angeordnet ist. Die Abschlussplatte weist dabei insbesondere eine innere Öffnung auf, welche rotationssymmetrisch zur Königszapfenrichtung ist und wobei der Drehteller und/oder der Königszapfen sich zumindest teilweise durch diese innere Öffnung der Abschlussplatte erstrecken. Hierdurch kann eine besonders kompakte Königszapfenanordnung bzw. Drehtellerlagerung erreicht werden.

In einer vorteilhaften Ausführungsform ist der Drehteller gleitgelagert gegenüber der Abschlussplatte und/oder, wobei der Drehteller gleitgelagert gegenüber der Kuppel ist. Durch die Gleitlagerung des Drehtellers relativ zur Abschlussplatte und/oder relativ zur Kuppel kann eine besonders bauraumsparende Königszapfenanordnung erreicht werden, denn bauraumbeanspruchende Wälzlageranordnungen können hierdurch gespart werden. Diese Wälzlageranordnungen sind dabei nicht nur in Richtung der radialen Richtung, sondern auch in Richtung der Königszapfenrichtung besonders bauraumintensiv, sodass ein Verzicht auf diese Wälzlageranordnungen zu einer sehr kompakten Königszapfenanordnung führt.

Vorteilhafterweise ist zwischen der Kuppel und dem Drehteller ein Gleitring und/oder zwischen dem Drehteller und der Abschlussplatte ein Gleitring angeordnet. Durch die Verwendung eines Gleitrings wird eine besonders verschleißarme und reibwertgeringe Gleitlagerung erreicht. Darüber hinaus weist diese Art der Gleitlagerung auch noch den Vorteil auf, dass durch ein Austauschen des kostengünstigen Gleitrings der Wartungsaufwand bzw. die Wartungskosten einer solchen Gleitlagerung sehr gering sind, denn insbesondere teure Teile wie der Drehteller und/oder die Abschlussplatte müssen nicht vollständig ersetzt werden, sondern der Ersatz eines verschlissenen Gleitrings reicht vollkommen aus.

Zweckmäßigerweise ist zumindest ein Gleitring und/oder die Gleitringe zumindest teilweise, bevorzugt vollständig, aus einem Kunststoff, insbesondere einem thermoplastischen Kunststoff, ausgebildet. Durch die Verwendung von Kunststoff in den Gleitringen bzw. dem Gleitring und/oder dem vollständigen Ausbilden des Gleitrings und/oder der Gleitringe aus Kunststoff resultieren besonders kostengünstige Gleitringe. Ein thermoplastischer Gleitring weist dabei besonders gute tribologische Eigenschaften, insbesondere im Hinblick auf die Kombination von Verschleiß und Reibwert, auf.

Vorteilhafterweise ist ein Umschlingungswinkel der Tragstruktur von der Königszapfenrichtung aus und in einer Ebene gemessen, dessen Normale parallel zur Königszapfenrichtung ist, in einem Bereich von 70° bis 190°, bevorzugt in einem Bereich von 90° bis 150° und besonders bevorzugt in einem Bereich von 110 bis 140°. Der Umschlingungswinkel ist dabei insbesondere derjenige Winkel, welcher von der Königszapfenrichtung aus gesehen die Tragstruktur umschließt. Beispielsweise ist dabei dieser Umschlingungswinkel der Öffnungswinkel des Vs, dessen Schenkelschnittpunkt auf der Königszapfenrichtung liegt und dessen Schenkel gerade die Tragstruktur vollständig umgeben. Bei einem Umschlingungswinkel im Bereich von 70 bis 90° kann eine besonders sichere Festlegung der Tragstruktur am Drehteller erreicht werden, da hierbei eine flächige Verbindungsmöglichkeit zwischen Drehteller und Tragstruktur schaffbar ist. Bei einem Umschlingungswinkel im Bereich von 110° bis 140° hingegen resultiert eine besonders bauraumsparende Königszapfenanordnung.

Weitere Vorteile und Merkmale der vorliegenden Erfindung ergeben sich aus der nachfolgenden Beschreibung mit Bezug auf die Figuren. Einzelne Merkmale der dargestellten Ausführungsform können dabei auch in anderen Ausführungsformen eingesetzt werden, sofern dies nicht ausdrücklich ausgeschlossen wurde. Es zeigen:
- Figur 1: eine perspektivische Ansicht einer Königszapfenanordnung;
- Figur 2: eine Ansicht einer Königszapfenanordnung in Königszapfenrichtung;
- Figur 3: eine Schnittansicht durch eine Königszapfenanordnung.

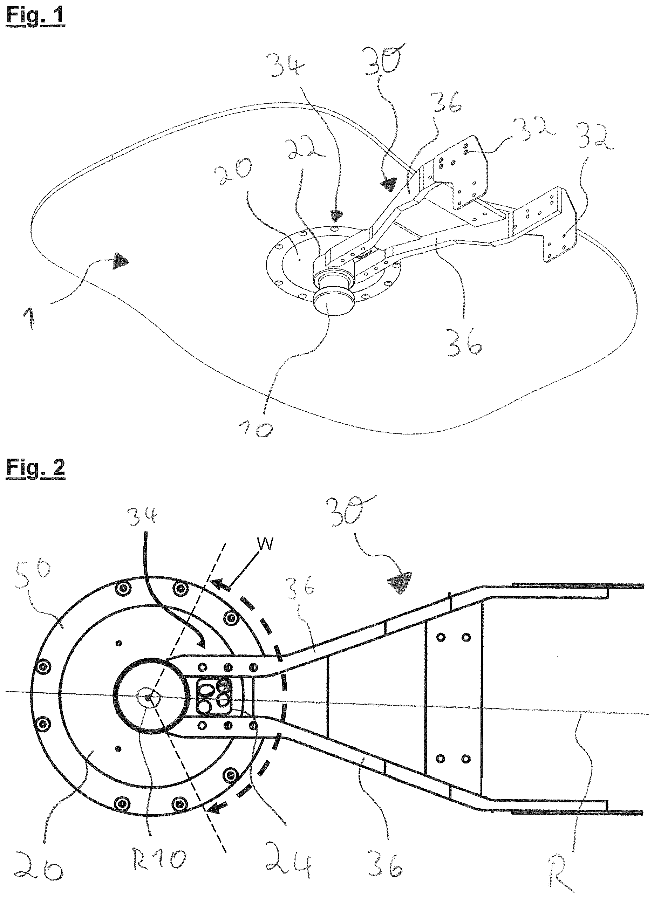

In **Figur 1** ist eine Königszapfenanordnung 1 gezeigt. Diese Königszapfenanordnung 1 weist dabei einen Königszapfen 10, einen Drehteller 20 sowie eine Tragstruktur 30 auf. Der Königszapfen 10 erstreckt sich dabei durch eine Öffnung 22. Die Tragstruktur 30 ist dabei mit einem ersten Ende 34 reversibel an dem Drehteller 20 festgelegt. An dem anderen distalen Ende der Tragstruktur 30 weist diese Befestigungsmittel 32 in Form von Löchern auf, wobei mittels dieser Befestigungsmittel ein Steckverbinder für ein automatisches Kupplungssystem an der Tragstruktur 30 festgelegt werden kann. Zwischen dem ersten Ende 34 und dem anderen distalen Ende der Tragstruktur 30 erstreckt sich ein V-förmiger Bereich. Die Tragstruktur 30 ist dabei derart ausgebildet, dass diese zwei Schenkel 36 aufweist, welche über Zwischenelemente miteinander verbunden sind.

In **Figur 2** ist eine Ansicht einer Königszapfenanordnung in Richtung der Königszapfenrichtung R10 gezeigt. Diese Königszapfenrichtung R10 ist dabei diejenige Richtung, in welche sich der Königszapfen 10 erstreckt und darüber hinaus auch insbesondere noch diejenige Richtung, um welche der Königszapfen 10 zumindest teilweise rotationssymmetrisch ausgebildet ist. Neben dem Königszapfen verfügt die erfindungsgemäße Königszapfenanordnung auch über einen Drehteller 20 und eine Tragstruktur 30. Die Tragstruktur 30 erstreckt sich dabei in die radiale Richtung R und weist darüber hinaus auch zwei seitlichberandende Schenkel 36 auf, welche zumindest bereichsweise V-förmig ausgebildet sind. In der Figur 2 ist zu erkennen, dass der V-förmig ausgebildete Abschnitt auf den Königszapfen 10 zuweisend ausgebildet ist. Wie der Figur 2 entnehmbar ist, ist der Königszapfen 10 zumindest teilweise zwischen Bestandteilen der Tragstruktur 30 angeordnet, denn zumindest Teile der Tragstruktur 30 erstrecken sich beidseitig zu dem Königszapfen 10. Die Tragstruktur 30 ist in der in Figur 2 dargestellten Ausführungsform derart ausgebildet, dass jeder Schenkel 36 ein erstes Ende 34 ausbildet, welches an dem Drehteller 22 festgelegt ist. Der Drehteller 20 weist einen Durchbruch 24 auf, welcher zwischen den zwei Schenkeln 36 mündet. Innerhalb bzw. durch diesen Durchbruch 24 sind dabei Kabel geführt. Der Drehteller 20 ist über die Abschlussplatte 50 gegen eine Verlagerung in Königszapfenrichtung formschlüssig gesichert. Bei der in der Figur 2 dargestellten Ausführungsform ist auch der Umschließungswinkel W erkennbar, welcher die Tragstruktur 30 umgibt.

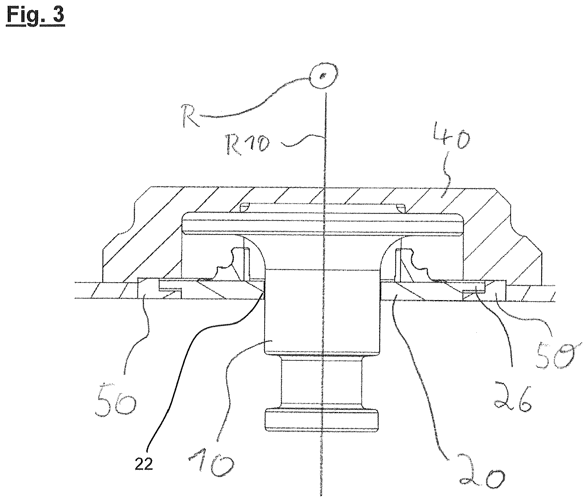

In **Figur 3** ist eine Schnittansicht durch ein Teil einer Königszapfenanordnung gezeigt. Die Schnittebene ist dabei derart gestaltet, dass dieser eine Normale parallel zur radialen Richtung R aufweist. Bei der in Figur 3 dargestellten Ausführungsform weist die Königszapfenanordnung eine Kuppel 40 auf, wobei zwischen der Kuppel 40 und der Abschlussplatte 50 der Lagerabschnitt 26 des Drehtellers 20 angeordnet ist. Wie in der Figur 3 erkennbar, weist der Drehteller 20 eine Öffnung 22 auf, durch die sich der in Königszapfenrichtung R10 erstreckende Königszapfen 10 erstreckt. Die Kuppel 40 dient dabei sowohl dazu, den Königszapfen 10 als auch den Drehteller 20 sowie die Abschlussplatte 50 gegenüber einem Anhänger bzw. einer Bodenplatte eines Anhängers zu lagern.

### Bezugszeichenliste:

- 1: - Königszapfenanordnung
- 10: - Königszapfen
- 20: - Drehteller
- 22: - Öffnung
- 24: - Durchbruch
- 26: - Lagerabschnitt des Drehtellers
- 30: - Tragstruktur
- 32: - Befestigungsmittel
- 34: - erstes Ende
- 36: - Schenkel
- 40: - Kuppel
- 50: - Abschlussplatte
- R: - radiale Richtung
- R10: - Königszapfenrichtung
- W: - Umschließungswinkel

## Patentansprüche

1. Königszapfenanordnung (1), insbesondere für ein automatisches Kupplungssystem, umfassend
einen Königszapfen (10), einen Drehteller (20) und eine Tragstruktur (30), wobei der Königszapfen (10) sich in eine Königszapfenrichtung (R10) erstreckt,
wobei der Drehteller (20) drehbar um die Königszapfenrichtung (R10) relativ zum Königszapfen (10) gelagert, insbesondere gleitgelagert, ist,
wobei der Drehteller (20) eine Öffnung (22) aufweist, durch welche sich der Königszapfen (10) erstreckt,
wobei die Tragstruktur (30) sich in eine radiale Richtung (R) erstreckt, wobei die Tragstruktur (30) Befestigungsmittel (32) zum mittelbaren und/oder unmittelbaren Befestigen und/oder zum Lagern eines Steckverbinders aufweist, und
wobei die Tragstruktur (30) mittel und/oder unmittelbar am Drehteller (20) festgelegt ist, insbesondere mit einem ersten Ende (34) der Tragstruktur (30), **dadurch gekennzeichnet, dass** die Tragstruktur (30) zwei Schenkel (36) aufweist,
wobei jeder der Schenkel (36) mittelbar und/oder unmittelbar am Drehteller (20) festgelegt ist,
wobei der Königszapfen (10) zumindest teilweise zwischen den Schenkeln (36) angeordnet ist.

2. Königszapfenanordnung (1) gemäß Anspruch 1,
wobei die Tragstruktur (30) in die radiale Richtung (R) über den Drehteller (20) hinaus ragt.

3. Königszapfenanordnung (1) gemäß einem der vorhergehenden Ansprüche, wobei der minimalste Abstand zwischen dem Königszapfen (10) und der Tragstruktur (30), insbesondere zwischen dem Königszapfen (10) und dem ersten Ende (34) der Tragstruktur (30), maximal 35 mm, bevorzugt maximal 10 mm und besonders bevorzugt maximal 5 mm, beträgt.

4. Königszapfenanordnung (1) gemäß einem der vorhergehenden Ansprüche, wobei das Verhältnis des minimalsten Abstands zwischen dem Königszapfen (10) und der Tragstruktur (30) zu dem maximalen Durchmesser des Drehtellers (20) in einem Bereich von 0,002 bis 0,3, bevorzugt in einem Bereich von 0,005 bis 0,2 und besonders bevorzugt in einem Bereich von 0,01 bis 0,13 liegt.

5. Königszapfenanordnung (1) gemäß einem der vorhergehenden Ansprüche, wobei die Tragstruktur (30) zumindest abschnittsweise v-förmig, insbesondere auf den Königszapfen (10) weisend, ausgebildet ist.

6. Königszapfenanordnung (1) gemäß einem der vorhergehenden Ansprüche, wobei der Drehteller (20) einen Außendurchmesser von maximal 400 mm, bevorzugt von maximal 300 mm und besonders bevorzugt von maximal 250 mm aufweist.

7. Königszapfenanordnung (1) gemäß einem der vorhergehenden Ansprüche, wobei der Drehteller (20) zumindest teilweise aus Messing und/oder Bronze ausgebildet ist.

8. Königszapfenanordnung (1) gemäß einem der vorhergehenden Ansprüche, wobei der Drehteller (20) zumindest einen Durchbruch (24) aufweist, wobei der Durchbruch (24) dazu ausgelegt ist, dass durch diesen Kabel und/oder Leitungen geführt sind.

9. Königszapfenanordnung (1) gemäß Anspruch 8,
wobei der Durchbruch (24) zwischen Teilen der Tragstruktur (30), insbesondere zwischen den zwei Schenkeln (36), mündet.

10. Königszapfenanordnung (1) gemäß einem der vorhergehenden Ansprüche,
wobei die Königszapfenanordnung (1) eine Kuppel (40) aufweist,
wobei der Königszapfen (10) mittel und/oder unmittelbar an der Kuppel (40) befestigt ist, und
wobei die Kuppel (40) eine Montagefläche aufweist, welche dazu ausgelegt ist, die Kuppel (40) an einem Anhänger festzulegen.

11. Königszapfenanordnung (1) gemäß einem der vorhergehenden Ansprüche,
wobei die Königszapfenanordnung (1) eine Abschlussplatte (50) aufweist,
wobei die Abschlussplatte (50) mittelbar und/oder unmittelbar an der Kuppel (40) angeordnet ist, und
wobei der Drehteller (20) zumindest abschnittsweise zwischen der Abschlussplatte (50) und der Kuppel (40) angeordnet ist,
insbesondere ist zumindest ein in die radiale Richtung (R) außen liegender Lagerabschnitt (26) des Drehtellers (20) zwischen der Kuppel (40) und er Abschlussplatte (50) angeordnet,
sodass eine Verlagerbarkeit des Drehtellers (20) in die Königszapfenrichtung (R10) und in die radiale Richtung (R) formschlüssig durch die Kuppel (40) und/oder durch die Abschlussplatte (50) verhindert ist.

12. Königszapfenanordnung (1) gemäß einem der Ansprüche 10 oder 11, wobei der Drehteller (20) gleitgelagert gegenüber der Abschlussplatte (50) ist und/oder
wobei der Drehteller (20) geleitgelagert gegenüber der Kuppel (40) ist.

13. Königszapfenanordnung (1) gemäß einem der Ansprüche 10 bis 12, wobei zwischen der Kuppel (40) und dem Drehteller (20) ein Gleitring und/oder
wobei zwischen dem Drehteller (20) und der Abschlussplatte (50) ein Gleitring angeordnet ist.

14. Königszapfenanordnung (1) gemäß einem der vorhergehenden Ansprüche, wobei ein Umschließungswinkel (W) der Tragstruktur (30) von der Königszapfenrichtung (R10) und in einer Ebene, dessen Normale parallel zu Königszapfenrichtung (R10) ist, gemessen,
in einem Bereich von 70° bis 190°, bevorzugt in einem Bereich von 90° bis 150°, und besonders bevorzugt in einem Bereich von 110° bis 140° liegt.

## Claims

1. A kingpin arrangement (1), in particular for an automatic coupling system, comprising
a kingpin (10), a turntable (20) and a support structure (30),
wherein the kingpin (10) extends in a kingpin direction (R10),
wherein the turntable (20) is mounted rotatably about the kingpin direction (R10) relative to the kingpin (10), in particular is mounted on a plain-bearing, wherein the turntable (20) has an opening (22) through which the kingpin (10) extends,
wherein the support structure (30) extends in a radial direction (R), wherein the support structure (30) comprises fastening means (32) for indirectly and/or directly fastening and/or mounting a plug connector, and wherein the support structure (30) is fixed indirectly and/or directly to the turntable (20), in particular with a first end (34) of the support structure (30), **characterized in that** the support structure (30) has two legs (36),
wherein each of the legs (36) is indirectly and/or directly fixed to the turntable (20),
wherein the kingpin (10) is at least partially arranged between the legs (36).

2. The kingpin arrangement (1) according to claim 1,
wherein the support structure (30) projects beyond the turntable (20) in the radial direction (R).

3. The kingpin arrangement (1) according to any one of the preceding claims, wherein the minimum distance between the kingpin (10) and the support structure (30), in particular between the kingpin (10) and the first end (34) of the support structure (30), is a maximum of 35 mm, preferably a maximum of 10 mm and more preferably a maximum of 5 mm.

4. The kingpin arrangement (1) according to any one of the preceding claims, wherein the ratio of the minimum distance between the kingpin (10) and the support structure (30) to the maximum diameter of the turntable (20) is in a range from 0.002 to 0.3, preferably in a range from 0.005 to 0.2 and more preferably in a range from 0.01 to 0.13.

5. The kingpin arrangement (1) according to any one of the preceding claims, wherein the support structure (30) is formed at least in sections in a v-shape, in particular pointing towards the kingpin (10).

6. The kingpin arrangement (1) according to any one of the preceding claims, wherein the turntable (20) has an outer diameter of at most 400 mm, preferably at most 300 mm and particularly preferably at most 250 mm.

7. The kingpin arrangement (1) according to any one of the preceding claims, wherein the turntable (20) is at least partially made of brass and/or bronze.

8. The kingpin arrangement (1) according to any one of the preceding claims, wherein the turntable (20) has at least one aperture (24),
wherein the aperture (24) is designed for cables and/or lines to be guided through it.

9. The kingpin arrangement (1) according to claim 8,
wherein the aperture (24) opens between parts of the support structure (30), in particular between the two legs (36).

10. The kingpin arrangement (1) according to any one of the preceding claims,
wherein the kingpin arrangement (1) comprises a dome (40),
wherein the kingpin (10) is indirectly and/or directly attached to the dome (40), and
wherein the dome (40) has a mounting face adapted to secure the dome (40) to a trailer.

11. The kingpin arrangement (1) according to any one of the preceding claims,
wherein the kingpin arrangement (1) comprises an end plate (50),
wherein the end plate (50) is arranged indirectly and/or directly at the dome (40), and
wherein the turntable (20) is arranged at least in sections between the end plate (50) and the dome (40),
in particular, at least one bearing section (26) of the turntable (20) lying on the outside in the radial direction (R) is arranged between the dome (40) and the end plate (50),
so that a displaceability of the turntable (20) in the kingpin direction (R10) and in the radial direction (R) is positively prevented by the dome (40) and/or by the end plate (50).

12. The kingpin arrangement (1) according to any one of claims 10 or 11,
wherein the turntable (20) is mounted on a plain-bearing with respect to the end plate (50) and/or
wherein the turntable (20) is mounted on a plain-bearing with respect to the dome (40).

13. The kingpin arrangement (1) according to any one of claims 10 to 12,
wherein a slide ring is arranged between the dome (40) and the turntable (20) and/or
wherein a slide ring is arranged between the turntable (20) and the end plate (50).

14. The kingpin arrangement (1) according to any one of the preceding claims,
wherein a wrap angle (W) of the support structure (30) measured from the kingpin direction (R10) and in a plane whose normal is parallel to the kingpin direction (R10),
lies in a range of 70° to 190°, preferably in a range of 90° to 150°, and more preferably in a range of 110° to 140°.

## Revendications

1. Ensemble de pivot central (1), en particulier destiné à un système d'attelage automatique, comprenant
un pivot central (10), un plateau tournant (20) et une structure porteuse (30), le pivot central (10) s'étendant dans une direction de pivot central (R10),
dans lequel
le plateau tournant (20) est monté, en particulier coulissant, de manière à pouvoir tourner autour de la direction de pivot central (R10) par rapport au pivot central (10),
le plateau tournant (20) présente une ouverture (22) à travers laquelle s'étend le pivot central (10),
la structure porteuse (30) s'étend dans une direction radiale (R),
la structure porteuse (30) présente des moyens de fixation (32) pour la fixation directe et/ou indirecte et/ou pour le logement d'un connecteur d'enfichage, et
la structure porteuse (30) est immobilisée directement et/ou indirectement au plateau tournant (20), en particulier par une première extrémité (34) de la structure porteuse (30),
**caractérisé en ce que**
la structure porteuse (30) comprend deux branches (36),
chacune des branches (36) est immobilisée directement et/ou indirectement au plateau tournant (20),
le pivot central (10) est disposé au moins partiellement entre les branches (36).

2. Ensemble de pivot central (1) selon la revendication 1,
dans lequel la structure porteuse (30) fait saillie au-delà du plateau tournant (20) dans la direction radiale (R).

3. Ensemble de pivot central (1) selon l'une des revendications précédentes,
dans lequel la distance minimale entre le pivot central (10) et la structure porteuse (30), en particulier entre le pivot central (10) et la première extrémité (34) de la structure porteuse (30), est au maximum de 35 mm, de préférence au maximum de 10 mm et de manière particulièrement préférée au maximum de 5 mm.

4. Ensemble de pivot central (1) selon l'une des revendications précédentes,
dans lequel le rapport de la distance minimale entre le pivot central (10) et la structure porteuse (30) sur le diamètre maximal du plateau tournant (20) est compris dans une plage de 0,002 à 0,3, de préférence dans une plage de 0,005 à 0,2 et de manière particulièrement préférée dans une plage de 0,01 à 0,13.

5. Ensemble de pivot central (1) selon l'une des revendications précédentes,
dans lequel la structure porteuse (30) est réalisée au moins localement en forme de V, en particulier en étant dirigée vers le pivot central (10).

6. Ensemble de pivot central (1) selon l'une des revendications précédentes,
dans lequel le plateau tournant (20) présente un diamètre extérieur de 400 mm au maximum, de préférence de 300 mm au maximum et de manière particulièrement préférée de 250 mm au maximum.

7. Ensemble de pivot central (1) selon l'une des revendications précédentes,
dans lequel le plateau tournant (20) est réalisé au moins partiellement en laiton et/ou en bronze.

8. Ensemble de pivot central (1) selon l'une des revendications précédentes,
dans lequel le plateau tournant (20) présente au moins une traversée (24), la traversée (24) est conçue pour faire passer des câbles et/ou des lignes.

9. Ensemble de pivot central (1) selon la revendication 8,
dans lequel la traversée (24) débouche entre des parties de la structure porteuse (30), en particulier entre les deux branches (36).

10. Ensemble de pivot central (1) selon l'une des revendications précédentes,
dans lequel l'ensemble de pivot central (1) comprend une coupole (40),
le pivot central (10) est fixé directement et/ou indirectement à la coupole (40), et
la coupole (40) comprend une surface de montage adaptée pour immobiliser la coupole (40) à une remorque.

11. Ensemble de pivot central (1) selon l'une des revendications précédentes,
dans lequel l'ensemble de pivot central (1) comprend une plaque de fermeture (50),
la plaque de fermeture (50) est fixée directement et/ou indirectement à la coupole (40), et
le plateau tournant (20) est disposé au moins localement entre la plaque de fermeture (50) et la coupole (40),
en particulier, au moins une portion de montage (26) du plateau tournant (20), située à l'extérieur dans la direction radiale (R), est disposée entre la coupole (40) et la plaque de fermeture (50),
de sorte qu'une possibilité de déplacement du plateau tournant (20) dans la direction de pivot central (R10) et dans la direction radiale (R) est empêchée par coopération de forme au moyen de la coupole (40) et/ou de la plaque de fermeture (50).

12. Ensemble de pivot central (1) selon l'une des revendications 10 ou 11, dans lequel le plateau tournant (20) est monté coulissant par rapport à la plaque de fermeture (50), et/ou
le plateau tournant (20) est monté coulissant par rapport à la coupole (40).

13. Ensemble de pivot central (1) selon l'une des revendications 10 à 12,
dans lequel une bague de coulissement est disposée entre la coupole (40) et le plateau tournant (20), et/ou
une bague de coulissement est disposée entre le plateau tournant (20) et la plaque de fermeture (50).

14. Ensemble de pivot royal (1) selon l'une des revendications précédentes, dans lequel un angle d'enveloppement (W) de la structure porteuse (30) mesuré depuis la direction de pivot central (R10) et dans un plan dont la normale est parallèle à la direction de pivot central (R10) est compris dans une plage de 70° à 190°, de préférence dans une plage de 90° à 150°, de manière particulièrement préférée dans une plage de 110° à 140°.
